# EUROPEAN PATENT SPECIFICATION

(11) **EP 0 523 126 B1**
(45) Date of publication and mention of the grant of the patent: **14.12.1994**
(21) Application number: 91907213.2
(22) Date of filing: 05.04.1991
(51) Int. Cl.: B65G 67/00, B65G 67/60

(54) **EMPTYING ARRANGEMENT ON BOARD A VESSEL**
ENTLEERUNGSANORDNUNG AN BORD EINES SCHIFFES
INSTALLATION DE VIDAGE MONTEE A BORD D'UN BATEAU

(30) Priority: 11.04.1990 NO 901650
(43) Date of publication of application: 20.01.1993
(73) Proprietor: PATOS AS, N-6040 Vigra (NO)
(72) Inventor: HAAHJEM, Knut, (NO); HAAHJEM, Lars, (NO)
(74) Representative: Leszczynski, André
(86) International application number: NO9100054
(87) International publication number: WO9115417

(56) References cited:
- NO-B- 138 442
- SE-B- 419 624
- SE-C- 180 520
- US-A- 2 829 803
- US-A- 3 365 241

## Description

The present invention relates to an emptying arrangement for bulk material in a cargo hold or in a storeroom, comprising a horizontal conveyor which is adapted for taking the bulk material to an outlet or to a further conveyor arrangement, the said horizontal conveyor being, at least in a completing stage of the emptying operation, positioned at the floor of the room, at least one diaphragm-like member which is attached to the floor of the room near the horizontal conveyor and to the walls of the room at a distance above the floor and dimensioned so as to be able to adjoin the said floor and walls, and means for supplying a pressure fluid to the space between the diaphragm-like member and said floor and walls.

Such an emptying arrangement is known from Swedish patent No. 180520. Here the cargo hold or storeroom is made up of a pressurized container of circular cross section, and the horizontal conveyor is slightly inclined chutes which lead to a centrally positioned outlet opening. Pressurized air is led to the chutes in order to fluidize the bulk material and provide increased pressure inside the container in order to force the bulk material out through the opening in the floor. Any material not naturally sliding down towards the chutes will be moved by supplying pressurized air between the wall of the container and two diaphragm members positioned at either side of the chutes in order thereby to tip the remaining bulk material inwards towards the chutes.

It will be appreciated that the pressure required in order thus to tip the bulk material, something which also involves a lifting operation, calls for rather a high air pressure at the back of the diaphragm. This air pressure creates correspondingly large stresses in the diaphragm. Particularly at the attachment of the diaphragm in the container, the strains will be considerable, and since these increase more or less proprotionately with the size of the diaphragm, it will only be possible to use this know system with containers of comparatively small dimensions and for lightweight bulk material. It would thus be altogether impractical - if at all possible in bulk vessels. In bulk vessels therefore entirely different systems are used. The most common one is still to discharge by means of a grab, with its inherent disadvantages. When discharging by grab, the hold must remain open all the time to the elements, part of the material is lost because it leaks or blows from the grab, such lost material generally resulting in contamination of the surroundings, and careless handling frequently causes damage both to the hatch coaming and the grab. Moreover, the grab will not be able to collect the final remains of the material itself but will need to be filled by means of manually operated equipment in the hold.

To obviate these disadvantages, closed systems may be used, e.g. the so-called gravity system. In this, the hold of the vessel is shaped as a long silo with hatches through which the material falls on to a longitudinal conveyor belt to be carried to a lift which takes the material above deck. This system affords a high discharge rate, but is expensive to purchase and does not utilize optimally the ship's volume. It is also very difficult or impossible to install subsequently in existing vessels.

Another system uses two scraper conveyors. One of these operates along one side of the room and carries the bulk material to a lift. The other rake operates at an angle to the first one, feeding it while moving back and forth along it. This system is comparatively reasonable to purchase and can readily be fitted afterwards in existing vessels. Nevertheless, it operates fairly slowly because most of the material needs to be transported by two scraper conveyors in turn, and it is also dependent on the hold being more or less of rectangular shape. An example of this system is shown in Norwegian patent No. 138442.

The aim of the present invention is thus to provide an emptying arrangement which is not encumbered by the above mentioned shortcomings and disadvantages, but can be adapted to most types of vessel and will be suitable regardless of the shape of the cargo hold.

This is achieved according to the invention in an emptying arrangement of the kind mentioned initially where the characteristic aspect is that the said means for supplying a pressure fluid comprises a plurality of flexible compartments which are positioned in the said space and capable, independently of each other, of being supplied with and emptied of pressure fluid.

By means of this design it does not become necessary to expose the diaphragm-like member to any direct air pressure from behind, which will to a considerable extent reduce the tensions in it. In particular, the strain on the points of attachment of the member will be much smaller, so that the system may be used even in large cargo holds. As the compartments will be of limited size, they may be supplied with quite a high pressure without overloading resulting, thus making it possible to lift or to move large and heavy quantities of material. The system will also be relatively economical, because most of the material will move in towards the horizontal conveyor by sliding naturally.

According to a preferred embodiment of the invention the compartments are constituted by inflatable cushions. In order that the diaphragm member may be extended fully when the final remainder of the material is being emptied, it is advantageous to make one cushion larger than the rest, and preferably the uppermost of them.

Additional advantageous features of the invention are stated in the subsidiary claims.

For a better understanding of the invention it will be described further with reference to the examplifying embodiment shown in the attached drawings.

Fig. 1 shows a sideview of a vessel, partly sectional, in which has been fitted an emptying arrangement according to the invention.

Fig. 2 shows a cross section of the vessel of fig. 1 with a full cargo hold.

Fig. 3 shows a section as in fig. 2, but after discharge of most of the material has taken place.

Fig. 4 is a section as in fig. 2 and 3 and illustrates use of the emptying arrangement according to the invention.

Fig. 5 is a section as in fig. 2 - 4 and shows the situation when discharge has been completed.

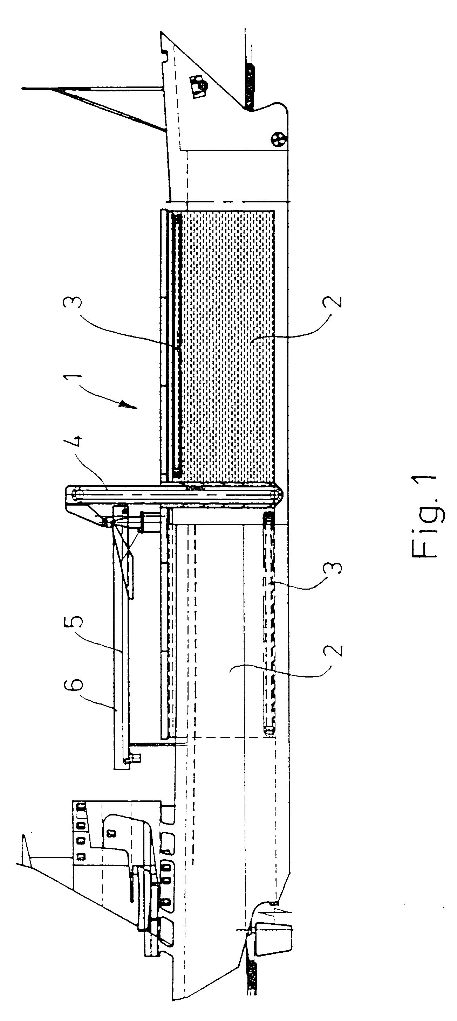

Shown in fig. 1 is a bulk cargo vessel generally described as 1. The vessel has two cargo holds 2, one of which is full and the other one empty. In each room is arranged a scraper conveyor 3 which can be raised and lowered in the middle plane of the vessel. Between the cargo holds 2 a lifting conveyor 4 is arranged, for instance in the form of a bucket elevator, feeding a belt conveyor 5, arranged on a derrick 6 for carrying the material ashore.

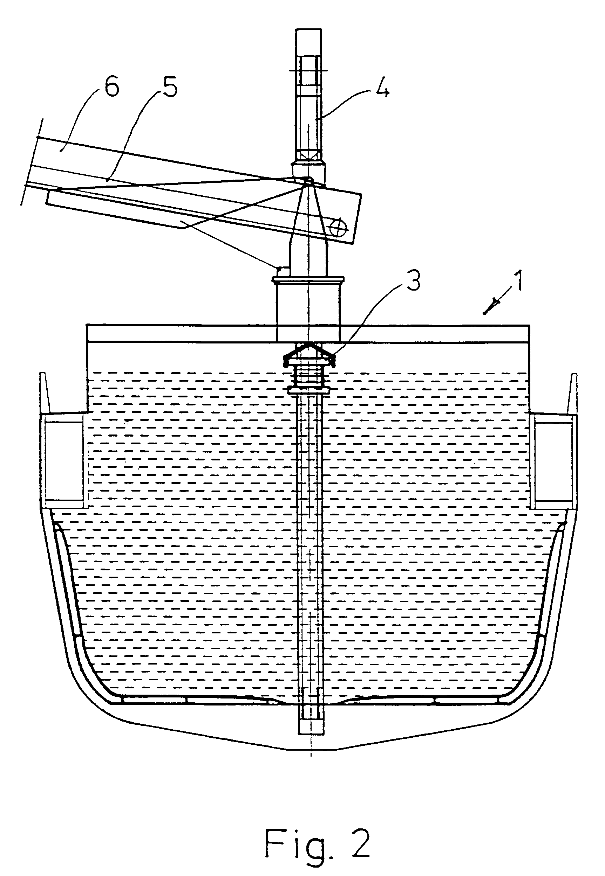

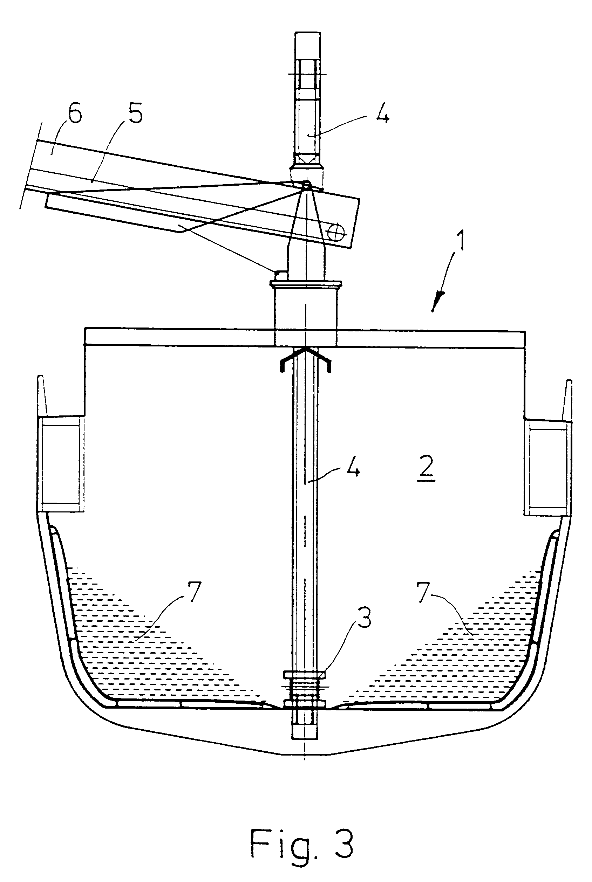

At initial discharging the situation is as shown in fig. 2. The scraper conveyor 3 moves the material to the bucket elevator 4 which in turn delivers it to the belt conveyor 5 on the derrick 6. As the scraper conveyor 3 gradually digs away the material, it will move downwards in the hold 2, and the cargo will slide down towards it at its natural sliding angle. In the end, the situation will be as shown in fig. 3. Here, remains of the material 7 lie at either side of the scraper conveyor.

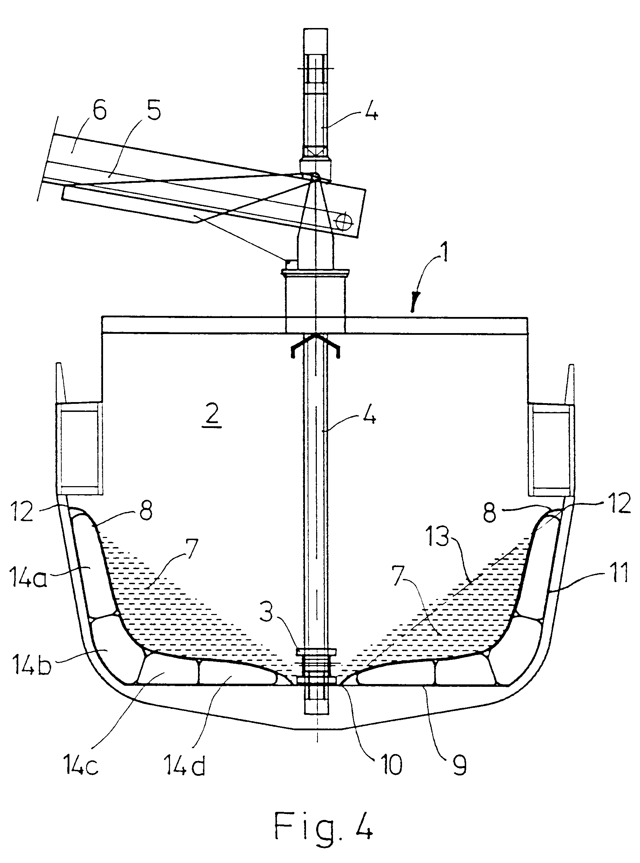

The emptying arrangement according to the invention is then being put to use, as illustrated in fig. 4. The emptying arrangement comprises two diaphragm-like members 8, one on either side of the scraper conveyor 3. The diaphragm members 8 are attached to the floor 9 of the cargo hold 2 at 10 right up against the scraper conveyor and the walls of the cargo hold at 11 and 12. The attachment point 12 is positioned high enough for an imaginary line 13 between this and the attachment point 10 at the floor of the cargo hold to form an angle with the horizontal larger than the natural sliding angle of the cargo 7.

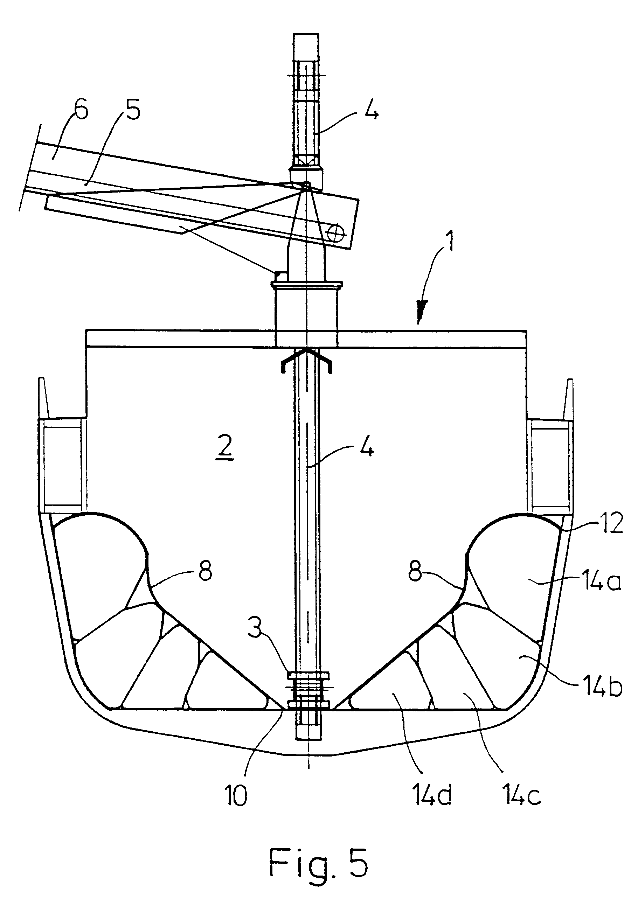

In the space between each of the diaphragm members 8 and the floor 9 of the cargo hold and its side wall 11, is arranged a plurality of flexible compartments in the form of inflatable cushions 14a - 14d. In fig. 4 these cushions are shown partially inflated. The cushions can be filled independently of each other with a suitable pressure fluid, e.g. air, and they can also be emptied individually. With suitable filling and emptying of the cushions 14a - 14d the remainder of the material 7 may be brought to slide down towards the scraper conveyor 3, and when discharge has been completed, the diaphragm-like members 8 and the cushions 14a - 14d will take the shape shown in fig. 5.

Manipulating the inflatable cushions 14a - 14d during the discharge stage shown in fig. 4 may be done in various ways, depending on the number of cushions and their respective sizes and the nature of the material. A possible way would be as follows:

Air is first supplied to the topmost cushion 14a. It will thereby increase its volume and push the topmost part of the material inwards in the hold 2 and make it slide down towards the conveyor 3. Then the innermost cushion 14d is filled partly. Here the cover of material is the shallowest and therefore the lightest to lift to cause it to slide down towards the conveyor 3.

When this has happened, cushion 14a is filled somewhat more while at the same time some air is bled from the innermost cushion 14d. Additional material will thereby slide down towards the conveyor 3. Alternately filling and emptying the cushion 14d while further inflating cushion 14a may be repeated if necessary until most of the material lying in front of cushion 14a and on top of cushion 14d has been discharged. At the same time, material lying on top of cushions 14b and 14c will be considerably reduced.

The middle cushions 14c and 14b can now be manipulated by alternate emptying and filling if this is necessary to move the remainder of the material forwards on top of cushion 14d and on to the conveyor 3. Finally, all cushions are filled in order to stretch the diaphragm member 8 and empty any remains as shown in fig. 5.

Fig. 5 also shows that the topmost cushion 14a is somewhat larger than the others. This is done precisely in order that the diaphragm can be stretched in the final position, since it has a greater length than the imaginary line 13 in order to be able to follow the floor and the walls of the cargo hold when the cargo hold is full. The topmost cushion has been selected to be the largest because it requires lower air pressure than the others during discharge and can therefore stand being larger without being overstrained.

If the bulk material is of a light type which slides readily, there is a possibility of manipulating the cushions in a simpler manner. It will not then be necessary to inflate the innermost cushion 14d until towards the end of the discharging, i.e. only when the other cushions have been used for pushing the material towards the middle of the hold. During this operation, several of the cushions 14a - 14c may be inflated simultaneously, or one by one in such a way that alternate filling and emptying of any of the cushions is obviated.

The material of the cushions may advantageously be a soft PVC. This material has been used previously with great success in fenders for ships, floats for the fishing industry etc. The diaphragm member may be of the same material.

It will be appreciated that the present invention may profitably be installed in existing vessels and especially in those where the cargo holds are not of rectangular shape. It will further be appreciated that the use of cushions between the diaphragm member and the cargo hold means that it is not necessary to depend on the diaphragm member being absolutely tight. The diaphragm member, in addition to pushing the material forward towards the scraper conveyor, will protect the cushions against damage from pointed objects.

If nevertheless, a cushion should suffer a puncture, the vessel may still be discharged by means of the remaining cushions, although the dishcarge time will be somewhat longer. In order that any punctured cushions may be repaired, it may be practical to provide access through a manhole in the diaphragm member.

Although the invention is described above with reference to a particular embodiment, it will be appreciated that the invention may be varied and modified in a number of ways within the scope of the ensuing claims. The number of cushions may thus be varied, and it is also possible to arrange them in two or more layers in order to reduce their diameter and strain. It will further be appreciated that if the emptying arrangement according to the invention is fitted into existing vessels with frames and such like protruding into the cargo hold, it is not necessary to cover up the spaces between the frames. These spaces may instead be utilized for locating the cushions.
It will also be appreciated that the cushions may readily be arranged so that at least some of them may be used as ballast tanks.
For somebody skilled in the art it will be evident that the emptying arrangement according to the invention offers a number of advantages. If the emptying arrangement is fitted in a vessel, this may be kept closed during discharge to keep loss and contamination of the surroundings at a minimum. It will be possible to have tight bulkheads between the cargo holds, and the system may thus also be used on large, ocean going bulk vessels. The system, without auxiliary devices, will be able to discharge the vessel completely, while at the same time the cargo volume of the vessel is optimal. The cargo goes all the way down to the so-called tank top, thus affording the vessel good stability. Almost all types of bulk material can be discharged, and the energy consumption per ton discharged is relatively low. The emptying arrangement is reasonable to procure and maintain, and besides has the great advantage that it may be used in existing vessels regardless of the shape of their cargo holds.

## Claims

1. An emptying arrangement for bulk material in cargo holds or storerooms (2), comprising a horizontal conveyor (3) which is adapted for carrying the bulk material to an outlet or a further conveyor arrangement, the said horizontal conveyor (3) being, at least in a completion stage of the emptying operation, positioned at the floor (9) of the room (2), at least one diaphragm-like member (8) which is attached to the floor (9) of the room (2) near the horizontal conveyor (3) and to the walls (11) of the room at a distance above the floor and is dimensioned for adjoining the said floor (9) and walls (11), and means for supplying a pressure fluid to the space between the diaphragm-like member (8) and the said floor (9) and walls (11), **characterized in** that said means for supplying a pressure fluid comprises a plurality of flexible compartments (14a - 14d) positioned in said space, which may independently of each other be supplied with and emptied of pressure fluid.

2. An emptying arrangement according to claim 1, **characterized in** that the compartments are constituted by inflatable cushions (14a - 14d).

3. An emptying arrangement according to claim 2, **characterized in** that the topmost cushion (14a) is larger than the others (14b - 14d).

4. An emptying arrangement according to claims 2 or 3, **characterized in** that the cushions (14a - 14d) are made from soft PVC.

5. An emptying arrangement according to any of the preceding claims, **characterized in** that the diaphragm-like member is made from soft PVC.

6. An emptying arrangement according to any of the preceding claims, **characterized in** that the diaphragm-like member (8) is equipped with a manhole.

7. An emptying arrangement according to any of the preceding claims, **characterized in** that the horizontal conveyor is a scraper conveyor (3) which may be raised or lowered.

8. An emptying arrangement according to any of the preceding claims, **characterized in** that the horizontal conveyor (3) is arranged longitudinally in the middle of the room (2) and that a diaphragm-like member (8) is arranged on either side of it.

9. An emptying arrangement according to any of the preceding claims, **characterized in** that it is installed in the cargo hold (2) of a vessel (1).

10. An emptying arrangement according to a preceding claim, **characterized in** that the said additional conveyor arrangement is a lifting conveyor (4).

## Patentansprüche

1. Entleerungsanordnung für Schüttgut in Laderäumen oder Lagerräumen (2), mit einem Horizontalförderer (3), der zum Befördern des Schüttguts zu einem Auslaß oder einer weiteren Förderanordnung ausgelegt ist, wobei der genannte Horizontalförderer (3) wenigstens in einem Abschlußstadium des Entladevorgangs auf dem Boden (9) des Raums (2) positioniert ist, mit wenigstens einem membranartigen Element (8), das an dem Boden (9) des Raums (2) in der Nähe des Horizontalförderers (3) und eine Distanz über dem Boden an den Wänden (11) des Raums angebracht ist und zum Anliegen an dem genannten Boden (9) und Wänden (11) dimensioniert ist, und mit einer Einrichtung zum Zuführen eines Druckfluids in den Raum zwischen dem membranartigen Element (8) und dem genannten Boden (9) und Wänden (11),
dadurch gekennzeichnet, daß die Einrichtung zum Zuführen eines Druckfluids eine Mehrzahl in dem genannten Raum angeordneter, flexibler Abteilungen (14a - 14d) aufweist, die unabhängig voneinander mit Druckfluid gefüllt und entleert werden können.

2. Entleerungsanordnung nach Anspruch 1,
dadurch gekennzeichnet, daß die Abteilungen durch aufblasbare Kissen (14a - 14d) gebildet sind.

3. Entleerungsanordnung nach Anspruch 2,
dadurch gekennzeichnet, daß das oberste Kissen (14a) größer als die anderen (14b - 14d) ist.

4. Entleerungsanordnung nach Anspruch 2 oder 3,
dadurch gekennzeichnet, daß die Kissen (14a - 14d) aus weichem PVC gebildet sind.

5. Entleerungsanordnung nach einem der vorausgehenden Ansprüche,
dadurch gekennzeichnet, daß das membranartige Element aus weichem PVC gebildet ist.

6. Entleerungsanordnung nach einem der vorausgehenden Ansprüche,
dadurch gekennzeichnet, daß das membranartige Element (8) mit einem Arbeitsloch ausgestattet ist.

7. Entleerungsanordnung nach einem der vorausgehenden Ansprüche,
dadurch gekennzeichnet, daß es sich bei dem Horizontalförderer um einen Kratzerförderer (3) handelt, der sich anheben oder absenken läßt.

8. Entleerungsanordnung nach einem der vorausgehenden Ansprüche,
dadurch gekennzeichnet, daß der Horizontalförderer (3) in Längsrichtung in dar Mitte des Raums (2) angeordnet ist und daß auf beiden Seiten desselben ein membranartiges Element (8) angeordnet ist.

9. Entleerungsanordnung nach einem der vorausgehenden Ansprüche,
dadurch gekennzeichnet, daß sie in dem Laderaum (2) eines Schiffes (1) angebracht ist.

10. Entleerungsanordnung nach einem der vorausgehenden Ansprüche,
dadurch gekennzeichnet, daß es sich bei der genannten zusätslichen Förderanordnung um einen Hubförderer (4) handelt.

## Revendications

1. Installation de déchargement de matériau en vrac contenu dans des cales ou des soutes de cargo (2), comportant un transporteur horizontal (3) conçu pour acheminer le matériau en vrac jusqu'à un orifice de sortie ou un autre transporteur, ledit transporteur horizontal (3) se trouvant, au moins à un stade d'achèvement de l'opération de déchargement, positionné sur le fond (9) de la cale (2), au moins un élément (8) sous forme de diaphragme fixé au fond (9) de la cale (2) près du transporteur horizontal (3) et aux parois (11) de la cale à distance au-dessus du fond et dimensionné pour réunir ledit fond (9) et les parois (11), et des moyens pour délivrer un fluide sous pression à l'espace entre l'élément (8) sous forme de diaphragme et ledit fond (9) et les parois (11), caractérisée en ce que lesdits moyens pour délivrer un fluide sous pression comportent une pluralité de compartiments flexibles (14a-14d) disposés dans ledit espace, qui peuvent être alimentés et vidés indépendamment les uns des autres de fluide sous pression.

2. Installation de déchargement selon la revendication 1, caractérisée en ce que les compartiments sont constitués par des coussins gonflables (14a-14d).

3. Installation de déchargement selon la revendication 2, caractérisée en ce que le coussin supérieur (14a) est de plus grandes dimensions que les autres (14b-14d).

4. Installation de déchargement selon les revendicacations 2 ou 3, caractérisé en ce que les coussins (14a-14d) sont réalisés en chlorure de polyvinyle souple.

5. Installation de déchargement selon l'une quelconque des revendications précédentes, caractérisée en ce que l'élément sous forme de diaphragme est réalisé en chlorure de polyvinyle souple.

6. Installation de déchargement selon l'une quelconque des revendications précédentes, caractérisée en ce que l'élément sous forme de diaphragme (8) est équipé d'un trou d'homme.

7. Installation de déchargement selon l'une quelconque des revendications précédentes, caractérisée en ce que le transporteur horizontal est un transporteur à racleur (3) qui peut être élevé ou abaissé.

8. Installation de déchargement selon l'une quelconque des revendications précédentes, caractérisée en ce que le transporteur horizontal (3) est disposé longitudinalement au milieu de la cale (2) et en ce qu'un élément sous forme de diaphragme (8) est disposé de chaque côté de celui-ci.

9. Installation de déchargement selon l'une quelconque des revendications précédentes, caractérisée en ce qu'elle est installée dans la cale (2) d'un navire (1).

10. Installation de déchargement selon l'une quelconque des revendications précédentes, caractérisée en ce que ledit transporteur supplémentaire est un transporteur élévateur (4).
